(19) **Europäisches Patentamt**

**European Patent Office**

**Office européen des brevets**

(11) **EP 1 232 597 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(21) Anmeldenummer: **00989787.7**

(22) Anmeldetag: **22.11.2000**

(51) Int Cl.:
*H04L 1/00* *(2006.01)*   *H04L 1/08* *(2006.01)*

(86) Internationale Anmeldenummer:
**PCT/DE2000/004125**

(87) Internationale Veröffentlichungsnummer:
**WO 2001/039422 (31.05.2001 Gazette 2001/22)**

(54) **VERFAHREN UND VORRICHTUNG ZUR BITRATENANPASSUNG MITTELS PUNKTIERUNG UND/ ODER VERVIELFACHUNG VON BITS**

METHOD FOR ADJUSTING THE BITRATE IN A COMMUNICATION DEVICE AND THE CORRESPONDING COMMUNICATION DEVICE

PROCEDE D'ADAPTATION DU DEBIT BINAIRE DANS UN DISPOSITIF DE COMMUNICATION ET DISPOSITIF DE COMMUNICATION CORRESPONDANT

(84) Benannte Vertragsstaaten:
**DE FR GB**

(30) Priorität: **25.11.1999 DE 19956749**
**19.05.2000 DE 10024784**

(43) Veröffentlichungstag der Anmeldung:
**21.08.2002 Patentblatt 2002/34**

(73) Patentinhaber: **SIEMENS AKTIENGESELLSCHAFT**
**80333 München (DE)**

(72) Erfinder:
• **MICHEL, Jürgen**
  **81737 München (DE)**
• **RAAF, Bernhard**
  **81475 München (DE)**

(56) Entgegenhaltungen:
**EP-A- 0 912 009**   **WO-A-00/21234**
**US-A- 5 416 787**

EP 1 232 597 B1

**Beschreibung**

Die vorliegende Erfindung betrifft ein Verfahren nach dem Oberbegriff des Anspruches 1 zur Anpassung der Bitrate in einer Kommunikationsvorrichtung sowie eine entsprechende Kommunikationsvorrichtung nach dem Oberbegriff des Anspruches 16.

Die Mobilfunktechnik befindet sich in einer raschen Entwicklung. Augenblicklich wird an der Standardisierung des sogenannten UMTS-Mobilfunkstandards ('Universal Mobile Telecommunication System') für Mobilfunkgeräte der dritten Mobilfunkgeneration gearbeitet.

Um die Bitrate an die jeweils mögliche Übertragungsrate anzupassen, wird im Sender eine Ratenanpassung ('Rate Matching') durchgeführt, wobei entweder Bits aus dem Bitstrom entfernt oder in dem Bitstrom vervielfacht, insbesondere verdoppelt, werden. Das Entfernen von Bits wird als 'Punktieren' und das Vervielfachen als 'Repetieren' bezeichnet.

Bei der Punktierung bzw. Repetierung wird in der Regel darauf geachtet, daß eine möglichst gleichmäßige Punktierung bzw. Repetierung der Bits erfolgt.

Beispielsweise offenbart Dokument EP-A-0 912 009 eine Bitpunktierung bzw. Wiederholungskodierung zur Bitratenanpassung mehrerer gemultiplexter Datenquellen auf eine Kodierrate. Die zur Bitratenanpassung benötigten Punktierungen bzw. Wiederholungen werden hierbei gleichmäßig auf den zu übertragenen Rahmen verteilt, indem jedes i-te Bit in einem zu übertragenden Rahmen entfernt, d.h. punktiert oder wiederholt wird.

Dokument WO00/21234 mit Veröffentlichungsdatum 13.04.2000 offenbart einen weiteren Ansatz zur gleichmäßigen Punktierung bzw. Repetierung von zu übertragenden Bits durch einen iterativen Punktierungsalgorithmus mit einem für alle Bits identischen Aktualisierungsparameter.

Dokument US-A-5 416 787 betrifft die Kodierung von Sprachsignalen in verschiedenen Fehleranfälligkeitsklassen und die Anwendung einer entsprechenden Punktierungsrate pro Klasse in Abhängigkeit von einer bitspezifischen Fehlersensitivität.

Weiterhin sind Algorithmen für eine möglichst gleichmäßige Punktierung bzw. Repetierung der Bits bekannt, wobei die Bits eines Bitstroms zu Rahmen zusammengefaßt werden und für die Bits der einzelnen Rahmen jeweils ein aktualisierter Fehlerwert bestimmt wird, der ein Maß für die Abweichung zwischen der augenblicklichen Punktierungs- bzw. Repetierungsrate und der gewünschten Punktierungs- bzw. Repetierungsrate darstellt. Abhängig von diesem aktualisierten Fehlerwert wird dann entschieden, ob das entsprechende Bit punktiert bzw. repetiert werden soll.

Die Berechnung des aktualisierten Fehlerwerts erfolgt dabei abhängig von einem für ein vorhergehendes Bit berechneten Fehlerwert und konstanten Aktualisierungsparametern.

Für bestimmte Anwendungsfälle kann jedoch auch eine ungleichmäßige Verteilung der punktierten bzw. repetierten Bits interessant sein.

So kann es beispielsweise wünschenswert sein, bestimmte Bitbereiche (sogenannte "Class A Bits") mit einer besseren Qualität als andere Bitbereiche (sogenannte "Class B-" oder "Class C-Bits") zu übertragen. Dies ist insbesondere für die Sprachübertragung relevant. Für AMR-Coder ("Adaptive Multi Rate"-Coder) in GSM-Mobilfunksystemen ("Global System Für Mobile Communications") wurde dieses Problem dadurch gelöst, daß heuristisch ein Punktierungsmuster ermittelt wurde, welches für den Bereich der Class A-Bits eine stärkere Punktierung als für die Bereiche der Class B- oder Class C-Bits vorsah. Dieses Vorgehen ist jedoch für UMTS-Systeme aus zwei Gründen nicht anwendbar. Zum einen steht bei UMTS-Systemen die Gesamtanzahl der zu punktierenden Bits bzw. die Gesamtanzahl der zu übertragenden Bits nicht a priori fest, sondern hängt von der Gesamtheit der zu übertragenden Dienste ab. Zum anderen muß die Punktierung, zumindest bei einer Uplink-Verbindung und im TDD-Modus ("Time Division Duplex") stets nach einem ersten Interleavingvorgang durchgeführt werden, wobei die Bits in allen Rahmen gleichmäßig punktiert werden müssen.

Ein weiterer Anwendungsfall für eine ungleichmäßige Punktierung ist das sogenannte "Tail Puncturing". Wird zur Kanalcodierung eine Faltungscodierung angewendet, was allgemein üblich ist, so werden die Bits am Anfang und am Ende eines Rahmens besser vor übertragungsfehlern geschützt als die im mittleren Rahmenbereich vorhandenen Bits. Dies ist jedoch teilweise gar nicht notwendig. Durch eine stärkere Punktierung in den Randbereichen des Rahmens kann dann eine gleichmäßigere Fehlerverteilung und damit eine insgesamt bessere übertragungsleistung erzielt werden.

Der vorliegenden Erfindung liegt daher die Aufgabe zugrunde, ein Verfahren zur Anpassung der Bitrate sowie eine entsprechende Kommunikationsvorrichtung vorzuschlagen, wobei mit möglichst geringem Aufwand eine ungleichmäßige Verteilung der punktierten bzw. repetierten Bits möglich ist.

Diese Aufgabe wird erfindungsgemäß durch ein Verfahren mit den Merkmalen des Anspruches 1 bzw. eine Kommunikationsvorrichtung mit den Merkmalen des Anspruches 16 gelöst. Die Unteransprüche definieren bevorzugte und vorteilhafte Ausführungsformen der vorliegenden Erfindung.

Erfindungsgemäß werden für die Bestimmung der aktualisierten Fehlerwerte bitspezifische und somit variable Aktualisierungsparameter verwendet, so daß durch entsprechende Wahl der Aktualisierungsparameter eine ungleichmäßige Punktierung bzw. Repetierung erzielt werden kann. Insbesondere kann die Punktierungs- bzw. Repetierungsrate gezielt gesteuert werden.

Darüber hinaus wird ein spezieller Algorithmus vorgestellt, der innerhalb ein und desselben Rahmens sowohl Punktierungen als auch Repetierungen ermöglicht.

Die vorliegende Erfindung eignet sich insbesondere zur Anpassung der Bitrate in (UMTS-)Mobilfunksystemen, wobei dies sowohl den Bereich des Mobilfunksenders als auch denjenigen des Mobilfunkempfängers betrifft, der zum Empfang eines erfindungsgemäß verarbeiteten Bitstroms ausgestaltet ist. Die Erfindung ist jedoch nicht auf diesen Anwendungsbereich beschränkt, sondern kann allgemein überall dort Anwendung finden, wo die Datenrate eines Bitstroms anzupassen ist.

Die vorliegende Erfindung wird nachfolgend unter Bezugnahme auf die beigefügte Zeichnung anhand eines bevorzugten Ausführungsbeispiels näher beschrieben.

Fig. 1 zeigt ein vereinfachtes Blockschaltbild eines erfindungsgemäßen Mobilfunksenders,

Fig. 2A zeigt einen möglichen Algorithmus, der von einer in Fig. 1 gezeigten Bitratenanpassungseinrichtung zur Punktierung eines Bitstroms verwendet werden kann,

Fig. 2B zeigt einen möglichen Algorithmus, der von der in Fig. 1 gezeigten Bitratenanpassungseinrichtung zur Repetierung eines Bitstroms verwendet werden kann, und

Fig. 3 zeigt einen weiteren möglichen Algorithmus, der von der in Fig. 1 gezeigten Bitratenanpassungseinrichtung zur Punktierung und Repetierung eines Bitstroms verwendet werden kann.

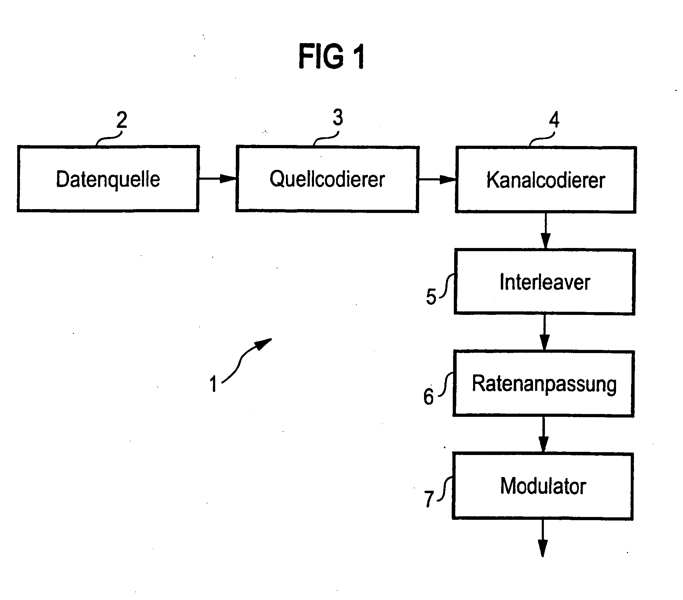

In Fig. 1 ist schematisch der Aufbau eines erfindungsgemäßen Mobilfunksenders 1 dargestellt, von dem Daten oder Kommunikationsinformationen, insbesondere Sprachinformationen, über einen Hochfrequenz-Übertragungskanal an einen Empfänger übertragen werden. Die von einer Datenquelle 2, beispielsweise einem Mikrofon, gelieferten Informationen werden zunächst mit einem digitalen Quellcodierer 3 in eine Bitfolge umgesetzt. Die codierten Daten werden anschließend mit Hilfe eines Kanalcodierers 4 codiert, wobei die eigentlichen Nutz- oder Nachrichtenbits redundant codiert werden, wodurch Übertragungsfehler erkannt und anschließend korrigiert werden können. Zur Kanalcodierung werden üblicherweise sogenannte Blockcodes oder Faltungscodes verwendet. Gemäß dem derzeitigen Stand der UMTS-Standardisierung wird die Verwendung von Faltungscodes vorgeschlagen. Ein wesentlicher Unterschied zu Blockcodes besteht darin, daß bei Faltungscodes nicht einzelne Datenblöcke nacheinander codiert werden, sondern daß es sich um eine kontinuierliche Verarbeitung handelt, wobei jedes aktuelle Codewort einer zu codierenden Eingangssequenz auch von den vorhergehenden Eingangssequenzen abhängt.

Vor der Übertragung der kanalcodierten Informationen zu dem Empfänger werden diese üblicherweise einem Interleaver 5 zugeführt, der die zu übertragenden Bits gemäß einem bestimmten Schema auf mehrere Interleaving-Rahmen aufteilt, wodurch die in der Regel bündelweise auftretenden Fehler verteilt werden, um einen sogenannten gedächnislosen (memoryless) Übertragungskanal mit einer quasizufälligen Fehlerverteilung zu erhalten. Die auf diese Weise codierten Informationen oder Daten werden einem Modulator 7 zugeführt, dessen Aufgabe es ist, die Daten auf ein Trägersignal aufzumodulieren und gemäß einem vorgegebenen Vielfachzugriffsverfahren über einen Hochfrequenz-Übertragungskanal an einen Empfänger zu übertragen. Um die Bitrate des codierten Datenstroms an die jeweils mögliche Übertragungsrate anzupassen, wird vor dem Modulator 7 mit Hilfe einer Einheit 6 eine Ratenanpassung ('Rate Matching') durchgeführt, wobei von der Einheit 6 bestimmte Bits gemäß einem vorgegebenen Schema punktiert, d.h. entfernt, oder repetiert, d.h. vervielfacht, werden. Die Einheit 6 kann alternativ auch vor dem Interleaver 5 angeordnet sein.

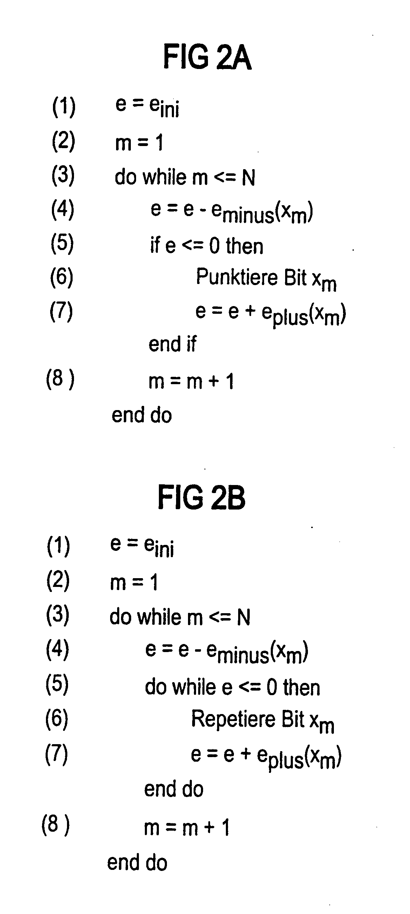

In Fig. 2A ist ein möglicher Algorithmus dargestellt, mit dem ein ungleichmäßiges Punktierungsmuster für die einem zu übertragenden Rahmen zugeordneten Bits erzielt werden kann. Dabei bezeichnet m die Position des augenblicklich betrachteten Bits $x_m$ in dem jeweiligen Rahmen, während N die Anzahl der Bits des Rahmens angibt. Der Algorithmus wertet einen kontinuierlich aktualisierten Fehlerwert e aus, welcher den Fehler zwischen der augenblicklichen Punktierungsrate und der gewünschte Punktierungsrate beschreibt. Für jedes Bit $x_m$ wird ein individueller Fehlerwert e, der sich aus dem Fehlerwert des in dem entsprechenden Rahmen vorhergehenden Bits $x_{m-1}$ und einem Aktualisierungsparameter $e_{minus}/e_{plus}$ zusammensetzt, folgendermaßen berechnet.

In einem Schritt (1) wird zunächst der Fehlerwert e auf einen Anfangsfehler $e_{ini}$ gesetzt. Dieser Anfangswert besitzt üblicherweise der Einfachheit halber den Wert 1. Anschließend wird in einem Schritt (2) der Index des augenblicklich betrachteten Bits auf 1 gesetzt und der in einer WHILE-Schleife (3) eingebettete Ablauf ausgeführt. Für das Bit $x_m$ wird somit der Fehlerwert aktualisiert, wobei hierzu die Differenz zwischen dem augenblicklichen Fehlerwert und einem vorgegebenen ersten Aktualisierungsparameter $e_{minus}$ berechnet wird (Schritt (4)). Ist das Ergebnis $e \leq 0$ (Schritt (5)), wird das Bit $x_m$ punktiert (Schritt (6)) und anschließend der Fehlerwert e nochmals aktualisiert, wobei hierzu der augenblickliche Fehlerwert e um einen vorgegebenen zweiten Aktualisierungsparameter $e_{plus}$ erhöht wird (Schritt (7)). Anschließend wird in einem Schritt (8) der Index des betrachteten Bits erhöht und somit die WHILE-Schleife für das nächste Bit des jeweiligen Rahmens durchlaufen.

Auf diese Weise wird für jedes Bit $X_m$ des Rahmens ein individueller Fehlerwert e berechnet, welcher sich aus dem für das vorhergehende Bit $X_{m-1}$ berechneten Fehlerwert bzw. bei m = 1 dem Initialisierungsfehler $e_{ini}$ und den Aktualisierungsparameteren $e_{minus}$ und $e_{plus}$ zusammensetzt.

Der in Fig. 2A gezeigte und zuvor beschriebene Algorithmus ist im Prinzip bereits bekannt. Bei dem herkömmlichen Algorithmus wird jedoch davon ausgegangen, daß die Parameter $e_{minus}$ und $e_{plus}$ für den gesamten Bereich des Rahmens konstant sind, d.h. zur Berechnung des Fehlerwerts e wird für jedes Bit $x_m$ derselbe Parameterwert $e_{minus}$ und $e_{plus}$ verwendet.

Im Rahmen der vorliegenden Erfindung wird jedoch vorgeschlagen, die Parameter $e_{minus}$ und $e_{plus}$ nicht für den gesamten Bereich des Rahmens konstant zu halten, sondern zu variieren. Im äußersten Fall kann jedem einzelnen Bit $x_m$ ein individueller Wert $e_{minus}(X_m)$ und/oder $e_{plus}(x_m)$ zugeordnet sein. Ebenso ist denkbar, daß die Bits zu bestimmten Gruppen zusammengefaßt sind, wobei den Bits innerhalb einer Gruppe dieselben Parameterwerte zugeordnet sind, während sich die Parameterwerte von Gruppe zu Gruppe unterscheiden. So können beispielsweise die ersten zehn Bits, die nächsten 20 Bits usw. eine derartige Gruppe bilden.

Da die Punktierungsdichte von den Parametern $e_{minus}$ und $e_{plus}$ abhängt, kann auf diese Weise die Punktierung individuell gesteuert und somit eine ungleichmäßige Punktierung erzielt werden.

In Fig. 2B ist ein entsprechender Algorithmus für den Fall einer Repetierung von Bits dargestellt. Zur Erläuterung der einzelnen Schritte (1)-(8) sei an dieser Stelle ergänzend auf die obigen Ausführungen zu Fig. 2A verwiesen. Der Repetierungsalgorithmus unterscheidet sich von dem Punktierungsalgorithmus lediglich dadurch, daß anstelle der IF-Anweisung eine WHILE-Schleife vorgesehen ist, so daß das jeweilige Bit $x_m$ solange repetiert und der dem Bit $x_m$ zugeordnete Fehlerwert e um $e_{plus}$ erhöht wird, bis der Fehlerwert größer als Null ist.

Auch gemäß dem in Fig. 2B gezeigten Repetierungsalgorithmus werden variable bitspezifische Parameterwerte $e_{minus}(x_m)$ und $e_{plus}(x_m)$ verwendet, um eine ungleichmäßige Repetierungsdichte zu erzielen.

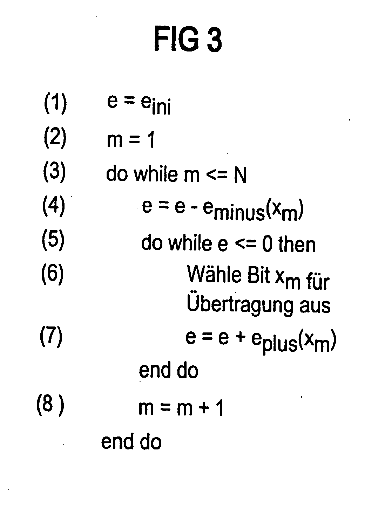

Um in einem einzelnen Rahmen sowohl eine Punktierung als auch eine Repetierung durchzuführen, kann der in Fig. 3 gezeigte Algorithmus verwendet werden, wobei wiederum ergänzend auf die obigen Anmerkungen zu Fig. 2A und Fig. 2B verwiesen wird. Der in Fig. 3 gezeigte Algorithmus entspricht einer Kombination der in Fig. 2A und Fig. 2B gezeigten Algorithmen, wobei in den Schritten (5)-(7) einen WHILE-Schleife ausgeführt wird, in der das entsprechende Bit $x_m$ so oft für die Übertragung zu einem Empfänger ausgewählt und der entsprechende Fehlerwert e um $e_{plus}$ erhöht wird, bis der Fehlerwert e einen Wert größer als Null annimmt. Dies bedeutet, daß das Bit $x_m$ überhaupt nicht für die Übertragung ausgewählt und somit punktiert wird, falls der im Schritt (4) aktualisierte Fehlerwert e größer als Null ist. Andererseits wird für den Fall, daß nach dem Schritt (4) der Fehlerwert e kleiner als oder gleich groß wie Null ist, das Bit $x_m$ genauso oft repetiert, wie der Fehlerwert e bis zum Erreichen des Werts Null um $e_{plus}$ vergrößert werden kann.

Bei dem in Fig. 3 gezeigten Algorithmus kann durch Variation des Parameters $e_{minus}$ gesteuert werden, in welchen Bereichen Bits punktiert und in welchen Bereichen Bits repetiert werden sollen. Eine Punktierung findet allgemein in denjenigen Bereichen statt, wo gilt $e_{minus} < e_{plus}$, während umgekehrt eine Repetierung dort durchgeführt wird, wo gilt $e_{minus} \geq e_{plus}$).

Bei einer AMR-codierten Übertragung mit beispielsweise konstantem Aktualisierugsparameter $e_{plus}$ kann somit der Parameter $e_{minus}(x_m)$ für die wichtigeren Class A-Bits relativ groß gewählt werden, um dadurch eine Repetierung dieser Bits zu erreichen, während dieser Parameter für die weniger wichtigen Class B- oder Class C-Bits relativ klein gewählt werden kann, um eine nur geringe Repetierung oder sogar eine Punktierung zu erzielen. Die hierzu notwendige Signalisierung, d.h. die Übermittlung von Werten zur Bestimmung der Parameter $e_{plus}(x_m)$ und/oder $e_{minus}(x_m)$ bzw. des Verhältnisses zwischen den einzelnen Parameterwerten, ist nicht aufwendiger als die derzeit bekannte Lösung, bei der vorgesehen ist, die Bits unterschiedlicher Klassen in unabhängige Transportkanäle zu schicken, für welche unabhängig voneinander die Punktierung bzw. Repetierung durchgeführt wird. Es muß lediglich die Gesamtzahl der Bits aller Transportkanäle nach der Punktierung bzw. Repetierung der Anzahl der für die Übertragung zur Verfügung stehenden Bits entsprechen. Bei dieser Vorgehensweise muß also ebenfalls für jede Klasse von Bits ihr relatives Gewicht bzw. ein entsprechender Parameter, der festlegt, ob für die jeweilige Klasse eine Repetierung oder Punktierung angewendet wird, übertragen werden.

Die Parameter $e_{minus}$ und $e_{plus}$ können beispielsweise wie folgt festgelegt werden, wobei N die Anzahl der Bits pro Rahmen vor der Ratenanpassung, $N_c$ die Anzahl der Bits pro Rahmen nach der Ratenanpassung und K eine der nachfolgend beschriebenen Gewichtung entsprechende Konstante bezeichnen:

$$e_{plus} = K$$

$$e_{minus} = w(x_m) * N_c$$

Der für jedes Bit $x_m$ individuell bestimmte Paramter w $(x_m)$ entspricht dem Gewicht des jeweiligen Bits $x_m$, wobei gilt: $\sum_{m=1}^{N} w(x_m) = K$ . Insgesamt wird somit der Fehlerwert e um $K*N_c$ erhöht und verringert. $w_{(xm)}$ bezeichnet das Gewicht, das dem Bit $x_m$, also dem m-ten Bit zugeordnet ist. In einer vereinfachten Nomenklatur kann dies auch durch w(m) ausgedrückt werden. Dieser Ausdruck kann auf andere Größen entsprechend angewandt werden. Auf diese Weise läßt sich jede beliebige Anzahl von zu übertragenden Bits einstellen.

Für die Anwendung dieses Prinzips auf das zuvor erwähnte "Tail Puncturing" lassen sich dabei die Gewichte w so wählen, dass die Bits am Anfang und Ende des Rahmens weniger stark gewichtet werden, als die Bits in der Mitte. Dazu wählt man das Gewicht w für die Bits am Anfang und Ende des Rahmens kleiner als für die Bits in der Mitte des Rahmens.

In einer besonders vorteilhaften Ausgestaltung dieses Prinzips wird w am Anfang streng monoton steigend gewählt, in einem Mittelteil konstant gehalten und am Ende streng monoton fallend.

Im UMTS system wird das Ratematching im Uplink nicht unmittelbar nach dem Kodieren sondern erst nach dem ersten Interleaver durchgeführt, der die Bits auf die einzelnen Funkrahmen, während der ein Datenrahmen übertragen wird, verteilt. Die Anzahl dieser Funkrahmen wird dabei TTI genannt und ist im UMTS-System 1,2,4 oder 8. Auch dafür ist die Erfindung anwendbar, da auch dann die Gewichte w verwendet werden können. Eine besonders einfache Implementierung ist dabei dann möglich, wenn die Gewichtsverteilung in allen TTI Funkrahmen identisch ist. Dies lässt sich dadurch erreichen, daß jeweils Blöcken von TTI aufeinanderfolgenden Bits das gleiche Gewicht zugeteilt wird. Dies ist insbesondere dann möglich, wenn jeweils Blöcken von 8 aufeinanderfolgenden Bits das gleiche Gewicht zugeteilt wird, da 8 durch jeden möglichen Wert von TTI teilbar ist.

Durch aufwendige Simulationen wurde die Bitfehlerrate, welche sich durch dieses Prinzip erreichen lässt, untersucht. Dabei hat sich das folgende Muster für Rate 1/3 Kodierung als besonders vorteilhaft erwiesen:

{1, 1, 1, 1, 1, 1, 1, 2, 2, 2, 2, 2, 2, 2, 2, 4, ... , 4, 2, 2, 2, 2, 2, 2, 2, 1, 1, 1, 1, 1, 1, 1, 1}

d.h. für die ersten und letzten 8 Bits ist $w(m) = 1$, . für die Bit Nr. 9-16 von beiden Enden gerechnet ist $w(m) = 2$, und ansonsten ist $w_s(m) = 4$. Dieses Muster lässt sich in allen Fällen leicht implementieren und zeigt eine gute Performance.

Für Rate 1/2 Kodierung hat sich das folgende Muster als besonders vorteilhaft erwiesen:

{1, 1, 1, 1, 1, 1, 1, 1, 4, ... , 4, 1, 1, 1, 1, 1, 1, 1, 1}

d.h. für die ersten und letzten 8 Bits ist $w(m) = 1$, und ansonsten ist $w_s(m) = 4$.

Das Muster für Rate 1/2 ist in diesem Fall ein Teil des Musters für Rate 1/3, das vereinfacht auch den Implementierungsaufwand, wenn beide Kodierungsraten implementiert werden.

Der Parameter q ist definiert in 3G TS 25.212 V3.2.0 (2000-03); Technical Specification; 3rd Generation Partnership Project; Technical Specification Group Radio Access Network; Multiplexing and channel coding (FDD); (Release 1999): Kapitel 4.2.7 Rate matching:

$q$:    Average puncturing or repetition distance (normalised to only show the remaining rate matching on top of an integer number of repetitions). Used in uplink only.

Dieser Parameter bezeichnet den durchschnittlichen Punktierungs- oder Repetierungs- Abstand, wobei der Durchschnitt über den ganzen Rahmen berechnet wird. Dadurch wird erreicht, dass die Punktierungsmuster, welche für die einzelnen Funkrahmen angewandt werden optimal gegeneinander verschoben sind.

Dieser Parameter sollte bei Anwendung dieser Erfindung aber nur über den Mittelteil mit konstanter Punktierungs- bzw. Repetierungs- Rate berechnet werden.

Für das o.g. Muster ergibt sich, dass p nicht berechnet wird als:

$R = \Delta N_{ij}$ mod $N_{ij}$ -- note: in this context $\Delta N_{ij}$ mod $N_{ij}$ is in the range of 0 to $N_{ij}$-1 i.e. -1 mod 10 = 9.

if $R \neq$ 0 and $2R \leq$ $N_{ij}$

   then q = $\lceil$ $N_{ij}$ / R $\rceil$

else

   q = $\lceil$ $N_{ij}$ / (R - $N_{ij}$) $\rceil$

endif

-- note: $q$ is a signed quantity.

sondern als

$R = (\Delta N_{ij}+T)$ mod $(N_{ij}-T)$ -- note: in this context $\Delta N_{ij}$ mod $N_{ij}$ is in the range of 0 to $N_{ij}$-1 i.e. -1 mod 10 = 9.

if $R \neq$ 0 and $2R \leq$ $N_{ij}$

   then q = $\lceil$ $(N_{ij}-T)$ / R $\rceil$

else

   q = $\lceil$ $(N_{ij}-T)$ / (R - $(N_{ij}-T)$) $\rceil$

endif

-- note: $q$ is a signed quantity.

T ist hierbei die effektive Anzahl der an beiden Enden zusätzlich punktierten Bits (bzw. weniger gesendeten Bits) und kann berechnet werden als

$$T= \quad N_{ij} - \sum_{i=1}^{Nij} (w(i)) \; / \; w_0$$

wobei $w_0$ das Gewicht eines Bits in der Mitte (dem Bereich wo die Gewichte konstant sind) ist.

Die vorliegende Erfindung wurde zuvor anhand der Verwendung in einem Mobilfunksender beschrieben. Selbstverständlich kann die Erfindung jedoch auch auf Mobilfunkempfänger ausgedehnt werden, wo ein zur Anpassung der Bitrate auf oben beschriebene Art und Weise punktiertes bzw. repetiertes Signal entsprechend dem jeweils verwendeten Punktierungs- bzw. Repetierungsschema aufgearbeitet werden muß. Dabei werden in dem jeweiligen Empfänger für sendeseitig punktierte bzw. repetierte Bits zusätzliche Bits in den Empfangs-Bitstrom eingefügt bzw. zwei oder mehr Bits des Empfangs-Bitstroms zusammengefaßt. Bei Einfügen von zusätzlichen Bits wird für diese gleichzeitig in Form einer sogenannten 'Soft Decision'-Information vermerkt, daß ihr Informationsgehalt sehr unsicher ist. Die Verarbeitung des Empfangssignals kann in dem jeweiligen Empfänger sinngemäß in umgekehrter Reihenfolge zu Fig. 1 erfolgen.

**Patentansprüche**

1. Verfahren zur Anpassung der Bitrate in einer Kommunikationsvorrichtung,
   wobei die Anpassung der Bitrate durch Punktieren oder Repetieren der Bits eines Bitstroms erfolgt, wobei bei der Punktierung bestimmte Bits entfernt bzw. bei der Repetierung bestimmte Bits vervielfacht werden,
   wobei für jedes Bit (x) ein aktualisierter Fehlerwert (e), der ein Maß für die Abweichung zwischen einer augenblicklichen Punktierungs- bzw. Repetierungsrate und einer gewünschten Punktierungs- bzw. Repetierungsrate ist, auf Grundlage eines entsprechenden bereits zuvor ermittelten Fehlerwerts und mindestens eines Aktualisierungsparameters ($e_{plus}$, $e_{minus}$) bestimmt und anhand des somit aktualisierten Fehlerwerts (e) beurteilt wird, ob das entsprechende Bit (x) punktiert bzw. repetiert werden soll oder nicht,
   **dadurch gekennzeichnet,**
   **daß** für die Bestimmung des aktualisierten Fehlerwerts (e) jedes Bits mindestens ein variabler, bitspezifischer Aktualisierungsparameter ($e_{plus}$, $e_{minus}$) verwendet wird.

2. Verfahren nach Anspruch 1,
   **dadurch gekennzeichnet,**
   **daß** die Bits (x) des Bitstroms in Rahmen zusammengefaßt werden, und
   **daß** für die Bestimmung des aktualisierten Fehlerwerts (e) der einzelnen Bits eines Rahmens jeweils ein variabler, von der Position (m) der jeweiligen Bits in dem Rahmen abhängiger Aktualisierungsparameter ($e_{plus}$, $e_{minus}$) verwendet wird.

3. Verfahren nach Anspruch 1 oder 2,
   **dadurch gekennzeichnet,**
   **daß** die Bits bestimmten Bitgruppen zugeordnet werden, wobei für die Bestimmung des aktualisierten Fehlerwerts (e) der einzelnen Bits (x) einer Bitgruppe derselbe Aktualisierungsparameter ($e_{plus}$, $e_{minus}$) verwendet wird.

4. Verfahren nach einem der vorhergehenden Ansprüche,
   **dadurch gekennzeichnet,**
   **daß** der aktualisierte Fehlerwert (e) jedes Bits (x) aus der Differenz zwischen dem entsprechenden bereits zuvor ermittelten Fehlerwert und einem ersten Aktualisierungsparameter ($e_{minus}$) ermittelt wird, und
   **daß** für den Fall, daß der somit bestimmte aktualisierte Fehlerwert (e) nicht größer als ein bestimmter Referenzwert ist, das entsprechende Bit punktiert und anschließend der für dieses Bit (x) ermittelte aktualisierte Fehlerwert nochmals durch die Summenbildung mit einem zweiten Aktualisierungsparameter ($e_{plus}$) aktualisiert wird.

5. Verfahren nach einem der vorhergehenden Ansprüche,
   **dadurch gekennzeichnet,**
   **daß** der aktualisierte Fehlerwert (e) jedes Bits (x) aus der Differenz zwischen dem entsprechenden bereits zuvor ermittelten Fehlerwert und einem ersten Aktualisierungsparameter ($e_{minus}$) bestimmt wird, und
   **daß** für den Fall, daß der somit aktualisierte Fehlerwert (e) nicht größer als ein bestimmter Referenzwert ist, das entsprechende Bit (x) solange repetiert und anschließend der für dieses Bit (x) aktualisierte Fehlerwert jeweils nochmals durch die Summenbildung mit einem zweiten Aktualisierungsparameter ($e_{plus}$) aktualisiert wird, bis der daraus resultierende Fehlerwert (e) größer als der Referenzwert ist.

6. Verfahren nach einem der Ansprüche 1-3,
   **dadurch gekennzeichnet,**
   **daß** der aktualisierte Fehlerwert (e) jedes Bits (x) aus der Differenz zwischen dem entsprechenden bereits zuvor ermittelten Fehlerwert und einem ersten Aktualisierungsparameter ($e_{minus}$) bestimmt wird, und
   **daß** für den Fall, daß der somit aktualisierte Fehlerwert (e) nicht größer als ein bestimmter Referenzwert ist, das entsprechende Bit (x) solange für eine Übertragung durch die Kommunikationsvorrichtung an einen Empfänger ausgewählt und anschließend der für dieses Bit (x) aktualisierte Fehlerwert jeweils nochmals durch die Summenbildung mit einem zweiten Aktualisierungsparameter ($e_{plus}$) aktualisiert wird, bis der daraus resultierende Fehlerwert (e) größer als der Referenzwert ist.

7. Verfahren nach einem der Ansprüche 4-6,
   **dadurch gekennzeichnet,**
   **daß** der Referenzwert Null ist.

8. Verfahren nach einem der Ansprüche 4-7,

**dadurch gekennzeichnet,**
**daß** der für die Ermittlung des aktualisierten Fehlerwerts (e) jedes Bits (x) verwendete erste Aktualisierungsparameter ($e_{plus}$) und/oder zweite Aktualisierungsparameter ($e_{minus}$) variabel ist und bitspezifisch gewählt wird.

9. Verfahren nach Anspruch 8,
**dadurch gekennzeichnet,**
**daß** der zweite Aktualisierungsparameter ($e_{minus}$) bitspezifisch gewählt wird als $e_{minus} = w * N_c$, wobei $N_c$ die Anzahl der Bits pro Rahmen nach der Ratenanpassung ist und die Gewichte w variabel sind und bitspezifisch gewählt werden.

10. Verfahren nach Anspruch 9,
**dadurch gekennzeichnet,**
**daß** die Gewichte w für Bits an beiden Enden des Rahmens kleiner gewählt werden als für Bits in der Mitte des Rahmens.

11. Verfahren nach einem der Ansprüche 9 oder 10,
**dadurch gekennzeichnet,**
**daß** die Gewichte w für jeweils TTI aufeinanderfolgende Bits gleich gewählt werden, wobei TTI die Anzahl der Funkrahmen ist, auf welche die Bits eines Datenrahmens verteilt werden.

12. Verfahren nach einem der Ansprüche 9 bis 11,
**dadurch gekennzeichnet,**
**daß** die Gewichte w für die ersten und letzten 8 Bits gleich 1, für die Bits Nr. 9-16 von beiden Enden gerechnet gleich 2, und ansonsten gleich 4 gewählt werden.

13. Verfahren nach einem der Ansprüche 9 bis 11,
**dadurch gekennzeichnet,**
**daß** die Gewichte w für die ersten und letzten 8 Bits gleich 1, und ansonsten gleich 4 gewählt werden.

14. Verfahren nach einem der vorgehenden Ansprüche,
**dadurch gekennzeichnet,**
**daß** die Verteilung der Aktualisierungsparameter bzw. die Gewichteverteilung in Abhängigkeit von einer Kodierrate gewählt wird.

15. Verfahren nach einem der vorgehenden Ansprüche,
**dadurch gekennzeichnet,**
**daß** der durchschnittliche Punktierungs- oder Repetierungs-Abstand q, welcher zur Bestimmung der optimalen relativen Verschiebung der Punktierungsmuster in einzelnen Funkrahmen ermittelt wird nicht aus dem Durchschnitt über den gesamten Rahmen ermittelt wird, sondern aus dem Durchschnitt über den Bereich, in dem die Aktualisierungsparameter bzw. Gewichte w der Bits einen konstanten Wert aufweisen.

16. Kommunikationsvorrichtung,
mit einer Bitratenanpassungseinrichtung (6) zur Anpassung der Bitrate durch Punktieren oder Repetieren von Bits (x) eines zugeführten Bitstroms,
mit Mitteln zum Punktieren durch Entfernen bestimmter Bits aus dem Bitstrom;
mit Mitteln zum Repetieren bestimmter Bits in dem Bitstrom; mit Mitteln zur Bestimmung eines aktualisierten Fehlerwerts (e) für jedes Bit (x) auf Grundlage eines entsprechenden bereits zuvor ermittelten Fehlerwerts;
mit Mitteln zur Bestimmung mindestens eines Aktualisierungsparameters ($e_{plus}$, $e_{minus}$) für jedes Bit (x); mit Mitteln zur Beurteilung anhand des somit aktualisierten Fehlerwerts (e), ob das entsprechende Bit (x) punktiert bzw. repetiert werden soll oder nicht,
**dadurch gekennzeichnet,**
**daß** die Bitratenanpassungseinrichtung (6) Mittel aufweist für die Verwendung eines variablen, bitspezifischen Aktualisierungsparameters ($e_{plus}$, $e_{minus}$) zur Bestimmung des aktualisierten Fehlerwerts (e) jedes Bits.

17. Kommunikationsvorrichtung nach Anspruch 16,
**dadurch gekennzeichnet,**
**daß** die Bitratenanpassungseinrichtung (6) Mittel zur Durchführung der schnitte des Verfahrens nach einem der Ansprüche 2-15 enthält.

**18.** Kommunikationsvorrichtung nach Anspruch 16 oder 17,
**dadurch gekennzeichnet,**
**daß** die Kommunikationsvorrichtung (1) eine Sendevorrichtung, insbesondere eine (UMTS-)Mobilfunksendevorrichtung, ist.

**19.** Kommunikationsvorrichtung,
mit Mitteln zum Empfangen und Auswerten eines von einer anderen Kommunikationsvorrichtung gesendeten Bitstroms;
mit Mitteln zur Berücksichtigung eines senderseitig angewendeten Punktierungs- oder Repetierungsschemas;
mit Mitteln zum Berücksichtigen senderseitig durch Punktieren aus dem Bitstrom entfernter Bits;
mit Mitteln zum Berücksichtigen senderseitig durch Repetieren in dem Bitstrom wiederholter Bits;
mit Mitteln zur Bestimmung eines aktualisierten Fehlerwerts (e) für jedes Bit (x) auf Grundlage eines entsprechenden bereits zuvor ermittelten Fehlerwerts;
mit Mitteln zur Bestimmung mindestens eines Aktualisierungsparameters ($e_{plus}$, $e_{minus}$) für jedes Bit (x) ;
mit Mitteln zur Beurteilung anhand des somit aktualisierten Fehlerwerts (e), ob das entsprechende Bit (x) senderseitig punktiert bzw. repetiert wurde oder nicht;
**dadurch gekennzeichnet,**
**daß** die Kommunikationsvorrichtung Mittel aufweist für die Verwendung eines variablen, bitspezifischen Aktualisierungsparameters ($e_{plus}$, $e_{minus}$) zur Bestimmung des aktualisierten Fehlerwerts (e) jedes Bits.


**Claims**

**1.** Method for matching the bit rate in a communication device,
in which the matching of the bit rate is performed by puncturing or repeating the bits of a bit stream, specific bits being removed in the case of puncturing, and specific bits being multiplied in the case of repetition,
in which for each bit (x) an updated error value (e) that is a measure of the deviation between an instantaneous puncturing or repetition rate and a desired puncturing or repetition rate is determined on the basis of a corresponding error value, already determined previously, and at least one update parameter ($e_{plus}$, $e_{minus}$), and a judgment is made on the basis of the error value (e) thus updated as to whether the corresponding bit (x) is to be punctured or repeated or not,
**characterized in that** at least one variable, bit-specific update parameter ($e_{plus}$, $e_{minus}$) is used to determine the updated error value (e) of each bit.

**2.** Method according to Claim 1,
**characterized in that** the bits (x) of the bit stream are combined in frames, and
**in that** use is made in each case of a variable update parameter ($e_{plus}$, $e_{minus}$) dependent on the position (m) of the respective bits in the frame in order to determine the updated error value (e) of the individual bits of a frame.

**3.** Method according to Claim 1 or 2,
**characterized in that** the bits are assigned to specific bit groups, the same update parameter ($e_{plus}$, $e_{minus}$) being used to determine the updated error value (e) of the individual bits (x) of a bit group.

**4.** Method according to one of the preceding claims,
**characterized in that** the updated error value (e) of each bit (x) is determined from the difference between the corresponding already previously determined error value and a first update parameter ($e_{minus}$), and **in that** for the case that the updated error value (e) thus determined is not greater than a specific reference value, the corresponding bit is punctured and subsequently the updated error value determined for this bit (x) is updated again by forming the sum with a second update parameter ($e_{plus}$) .

**5.** Method according to one of the preceding claims,
**characterized in that** the updated error value (e) of each bit (x) is determined from the difference between the corresponding already previously determined error value and a first update parameter ($e_{minus}$), and **in that** for the case that the error value (e) thus updated is not greater than a specific reference value, the corresponding bit (x) is repeated, and subsequently the error value updated for this bit (x) is in each case updated again by forming the sum with a second update parameter ($e_{plus}$), until the error value (e) resulting therefrom is greater than the reference value.

**6.** Method according to one of Claims 1-3,
**characterized in that** the updated error value (e) of each bit (x) is determined from the difference between the corresponding already previously determined error value and a first update parameter ($e_{minus}$), and **in that** for the case that the error value (e) thus updated is not greater than a specific reference value, the corresponding bit (x) is selected for transmission by the communication device to a receiver, and subsequently the error value updated for this bit (x) is updated in each case again by forming the sum with a second update parameter ($e_{plus}$), until the error value (e) resulting therefrom is greater than the reference value.

**7.** Method according to one of Claims 4-6,
**characterized in that** the reference value is zero.

**8.** Method according to one of Claims 4-7,
**characterized in that** the first update parameter ($e_{plus}$), used for determining the updated error value (e) of each bit (x), and/or second update parameter ($e_{minus}$) are/is variable and selected in a bit-specific fashion.

**9.** Method according to Claim 8,
**characterized in that** the second update parameter ($e_{minus}$) is selected in a bit-specific fashion as $e_{minus} = w * N_c$, $N_c$ being the number of bits per frame after the rate matching, and the weights w being variable and selected in a bit-specific fashion.

**10.** Method according to Claim 9,
**characterized in that** the weights w for bits at both ends of the frame are selected to be smaller than for bits in the middle of the frame.

**11.** Method according to one of Claims 9 or 10,
**characterized in that** the weights w for in each case TTI consecutive bits are selected to be equal, TTI being the number of radio frames over which the bits of a data frame are distributed.

**12.** Method according to one of Claims 9 to 11,
**characterized in that** the weights w are selected to be equal to 1 for the first and last 8 bits, to be equal to 2 for bits No. 9-16 calculated from both ends, and are otherwise selected to be equal to 4.

**13.** Method according to one of Claims 9 to 11,
**characterized in that** the weights w are selected to be equal to 1 for the first and last 8 bits, and otherwise to be equal to 4.

**14.** Method according to one of the preceding claims,
**characterized in that** the distribution of the update parameters or the weight distribution is selected as a function of a coding rate.

**15.** Method according to one of the preceding claims,
**characterized in that** the average puncturing or repetition distance q, which for the purpose of determining the optimum relative displacement of the puncturing patterns in individual radio frames is determined not from the average over the entire frame, but from the average over the range in which the update parameters or weights w of the bits have a constant value.

**16.** Communication device
having a bit rate matching device (6) for matching the bit rate by puncturing or repetition of bits (x) of a supplied bit stream,
having means for puncturing by removing specific bits from the bit stream;
having means for repeating specific bits in the bit stream;
having means for determining an updated error value (e) for each bit (x) on the basis of a corresponding already previously determined error value;
having means for determining at least one update parameter ($e_{plus}$, $e_{minus}$) for each bit (x);
having means for making a judgment with the aid of the error value (e) thus updated as to whether the corresponding bit (x) is to be punctured or repeated or not,
**characterized in that** the bit rate matching device (6) has means for using a variable, bit-specific update parameter ($e_{plus}$, $e_{minus}$) to determine the updated error value (e) of each bit.

**17.** Communication device according to Claim 16,
**characterized in that** the bit rate matching device (6) has means for carrying out the steps of the method according to one of claims 2-15.

**18.** Communication device according to Claim 16 or 17,
**characterized in that** the communication device (1) is a transmitting device, in particular a (UMTS) mobile radio transmitting device.

**19.** Communication device,
having means for receiving and evaluating a bit stream sent by another communication device;
having means for taking a puncturing or repetition scheme applied at the transmitter end into account,
having means for taking bits removed from the bit stream by puncturing at the transmitter end into account;
having means for taking bits repeated in the bit stream by repetition at the transmitter end into account;
having means for determining an updated error value (e) for each bit(x) on the basis of a corresponding already previously determined error value;
having means for determining at least one update parameter ($e_{plus}$, $e_{minus}$) for each bit (X) ;
having means for making a judgment with the aid of the error value (e) thus updated as to whether the corresponding bit (x) is to be punctured or repeated or not at the transmitter end;
**characterized in that**
the communication device has means for using a variable, bit-specific update parameter ($e_{plus}$, $e_{minus}$) to determine the updated error vale (e) of each bit.

**Revendications**

**1.** Procédé d'adaptation du débit binaire dans un dispositif de communication,
l'adaptation du débit binaire étant réalisée par ponction ou répétition des bits d'un flux binaire, certains bits étant retirés lors de la ponction resp. certains bits étant multipliés lors de la répétition,
une valeur d'erreur mise à jour (e), qui est une mesure pour l'écart entre un débit de ponction momentané resp. un débit de répétition momentané et un débit de ponction souhaité resp. un débit de répétition souhaité, étant déterminée pour chaque bit (x) sur la base d'une valeur d'erreur correspondante déjà déterminée auparavant et d'au moins un paramètre de mise à jour ($e_{plus}$, $e_{minus}$), et une évaluation étant effectuée à l' aide de la valeur d'erreur (e) ainsi mise à jour afin de constater si le bit correspondant (x) doit être ponctué resp. répété ou non,
**caractérisé en ce**
**qu'** au moins un paramètre de mise à jour ($e_{plus}$, $e_{minus}$) variable et spécifique au bit est utilisé pour déterminer la valeur d'erreur (e) mise à jour de chaque bit.

**2.** Procédé selon la revendication 1,
**caractérisé en ce**
**que** les bits (x) du flux binaire sont regroupés en trames, et en ce qu'un paramètre de mise à jour ($e_{plus}$, $e_{minus}$) variable, dépendant de la position (m) du bit respectif dans la trame, est utilisé pour déterminer la valeur d'erreur (e) mise à jour de chacun des bits d'une trame.

**3.** Procédé selon la revendication 1 ou 2,
**caractérisé en ce**
**que** les bits sont affectés à certains groupes de bits, le même paramètre de mise à jour ($e_{plus}$, $e_{minus}$) étant utilisé pour déterminer la valeur d'erreur (e) mise à jour de chacun des bits (x) d'un groupe de bits.

**4.** Procédé selon l'une quelconque des revendications précédentes,
**caractérisé en ce**
**que** la valeur d'erreur (e) mise à jour de chaque bit (x) est déterminée à partir de la différence entre la valeur d'erreur correspondante déjà déterminée auparavant et un premier paramètre de mise à jour ($e_{minus}$) et
en ce qu'au cas où la valeur d'erreur (e) mise à jour et ainsi déterminée n'est pas supérieure à une certaine valeur de référence, le bit correspondant est ponctué et qu'ensuite la valeur d'erreur mise à jour et déterminée pour ce bit (x) est mise à jour encore une fois par la formation de la somme au moyen d'un deuxième paramètre de mise à jour ($e_{plus}$).

**5.** Procédé selon l'une quelconque des revendications précédentes,

**caractérisé en ce**

**que** la valeur d'erreur (e) mise à jour de chaque bit (x) est déterminée à partir de la différence entre la valeur d'erreur correspondante déjà déterminée auparavant et un premier paramètre de mise à jour ($e_{minus}$) et

en ce qu'au cas où la valeur d'erreur (e) mise à jour n'est pas supérieure à une certaine valeur de référence, le bit correspondant (x) est répété et qu'ensuite la valeur d'erreur mise à jour pour ce bit (x) est mise à jour encore une fois par la formation de la somme au moyen d'un deuxième paramètre de mise à jour ($e_{plus}$), jusqu'à ce que la valeur d'erreur (e) en résultant soit supérieure à la valeur de référence.

6.  Procédé selon l'une quelconque des revendications 1 à 3,
    **caractérisé en ce**
    **que** la valeur d'erreur (e) mise à jour de chaque bit (x) est déterminée à partir de la différence entre la valeur d'erreur correspondante déjà déterminée auparavant et un premier paramètre de mise à jour ($e_{minus}$) et
    en ce qu'au cas où la valeur d'erreur (e) ainsi mise à jour n'est pas supérieure à une certaine valeur de référence, le bit correspondant (x) est sélectionné pour une transmission à un récepteur par le dispositif de communication et qu'ensuite la valeur d'erreur mise à jour pour ce bit (x) est mise à jour encore une fois par la formation de la somme au moyen d'un deuxième paramètre de mise à jour ($e_{plus}$), jusqu'à ce que la valeur d'erreur (e) en résultant soit supérieure à la valeur de référence.

7.  Procédé selon l'une quelconque des revendications 4 à 6,
    **caractérisé en ce**
    **que** la valeur de référence est zéro.

8.  Procédé selon l'une quelconque des revendications 4 à 7,
    **caractérisé en ce**
    **que** le premier paramètre de mise à jour ($e_{plus}$) utilisé pour déterminer la valeur d'erreur (e) mise à jour de chaque bit (x) et/ou le deuxième paramètre de mise à jour ($e_{minus}$) sont variables et sont sélectionnés de manière spécifique aux bits.

9.  Procédé selon la revendication 8,
    **caractérisé en ce**
    **que** le deuxième paramètre de mise à jour ($e_{minus}$) est sélectionné de manière spécifique aux bits en tant que $e_{minus}$ = w * $N_c$, $N_c$ étant le nombre de bits par trame après l'adaptation du débit et les pondérations w étant variables et étant sélectionnées de manière spécifique aux bits.

10. Procédé selon la revendication 9,
    **caractérisé en ce**
    **que** les pondérations w pour les bits sont sélectionnées plus petites aux deux extrémités de la trame que pour les bits du milieu de la trame.

11. Procédé selon l'une des revendications 9 ou 10,
    **caractérisé en ce**
    **que** les pondérations w pour respectivement TTI bits successifs sont sélectionnées de manière identique, TTI étant le nombre des trames radio sur lesquelles les bits d'une trame de données sont répartis.

12. Procédé selon l'une quelconque des revendications 9 à 11,
    **caractérisé en ce**
    **que** les pondérations w pour les 8 premiers et les 8 derniers bits sont sélectionnées en étant identiques à 1, qu'elles sont identiques à 2, en étant calculées à partir des deux extrémités, pour les bits n° 9 à 16 et qu'elles sont sinon sélectionnées en étant identiques à 4.

13. Procédé selon l'une quelconque des revendications 9 à 11,
    **caractérisé en ce**
    **que** les pondérations w pour les 8 premiers et les 8 derniers bits sont sélectionnées en étant identiques à 1 et qu'elles sont sinon sélectionnées en étant identiques à 4.

14. Procédé selon l'une quelconque des revendications précédentes,
    **caractérisé en ce**
    **que** la répartition des paramètres de mise à jour resp. la répartition des pondérations est sélectionnée en fonction d'un débit de codage.

**15.** Procédé selon l'une quelconque des revendications précédentes,
**caractérisé en ce**
**que** la distance moyenne q de ponction ou de répétition, laquelle est calculée pour déterminer le décalage relatif optimal des modèles de ponction dans chacune des trames radio, n'est pas déterminée à partir de la moyenne réalisé sur toutes les trames mais à partir de la moyenne réalisée sur la plage dans laquelle les paramètres de mise à jour resp. les pondérations w des bits présentent une valeur constante.

**16.** Dispositif de communication
comprenant un dispositif d'adaptation du débit binaire (6) destiné à adapter le débit binaire par ponction ou répétition de bits (x) d'un flux binaire alimenté,
comprenant des moyens destinés à ponctuer par retrait de certains bits hors du flux binaire ;
comprenant des moyens destinés à répéter certains bits dans le flux binaire ;
comprenant des moyens destinés à déterminer une valeur d'erreur (e) mise à jour pour chaque bit (x) sur la base d'une valeur d'erreur correspondante déjà déterminée auparavant ;
comprenant des moyens destinés à déterminer au moins un paramètre de mise à jour ($e_{plus}$, $e_{minus}$) pour chaque bit (x),
comprenant des moyens destinés à évaluer, à l'aide de la valeur d'erreur (e) ainsi déterminée, si le bit correspondant (x) doit être ponctué resp. répété ou non,
**caractérisé en ce**
**que** le dispositif d'adaptation du débit binaire (6) présente des moyens pour l'utilisation d'un paramètre de mise à jour ($e_{plus}$, $e_{minus}$) variable et spécifique aux bits pour déterminer la valeur d'erreur (e) mise à jour de chaque bit.

**17.** Dispositif de communication selon la revendication 16,
**caractérisé en ce**
**que** le dispositif d'adaptation du débit binaire (6) contient des moyens pour la réalisation des étapes du procédé selon l'une quelconque des revendications 2 à 15.

**18.** Dispositif de communication selon la revendication 16 ou 17,
**caractérisé en ce**
**que** le dispositif de communication (1) est un dispositif d'émission, notamment un dispositif d'émission radio mobile (UMTS).

**19.** Dispositif de communication
comprenant des moyens destinés à recevoir et évaluer un flux binaire émis par un autre dispositif de communication ;
comprenant des moyens destinés à tenir compte d'un schéma de ponction ou de répétition appliqué côté émetteur ;
comprenant des moyens destinés à tenir compte de bits retirés du flux binaire, côté émetteur, par ponction ;
comprenant des moyens destinés à tenir compte de bits répétés dans le flux binaire, côté émetteur, par répétition ;
comprenant des moyens destinés à déterminer une valeur d'erreur (e) mise à jour pour chaque bit (x) sur la base d'une valeur d'erreur correspondante déjà déterminée auparavant ;
comprenant des moyens destinés à déterminer au moins un paramètre de mise à jour ($e_{plus}$, $e_{minus}$) pour chaque bit (x) ;
comprenant des moyens destinés à évaluer, à l'aide de la valeur d'erreur (e) ainsi mise à jour, si le bit correspondant (x) doit être ponctué resp. répété ou non côté émetteur,
**caractérisé en ce**
**que** le dispositif de communication présente des moyens pour l'utilisation d'un paramètre de mise à jour ($e_{plus}$, $e_{minus}$) variable et spécifique aux bits pour déterminer la valeur d'erreur (e) mise à jour de chaque bit.

# FIG 1

2

3

4

Datenquelle → Quellcodierer → Kanalcodierer

1

5 Interleaver

6 Ratenanpassung

7 Modulator

# FIG 2A

(1)  $e = e_{ini}$

(2)  $m = 1$

(3)  do while m <= N

(4)  $\quad e = e - e_{minus}(x_m)$

(5)  $\quad$ if e <= 0 then

(6)  $\quad\quad$ Punktiere Bit $x_m$

(7)  $\quad\quad e = e + e_{plus}(x_m)$

$\quad$ end if

(8 )  $\quad m = m + 1$

end do


# FIG 2B

(1)  $e = e_{ini}$

(2)  $m = 1$

(3)  do while m <= N

(4)  $\quad e = e - e_{minus}(x_m)$

(5)  $\quad$ do while e <= 0 then

(6)  $\quad\quad$ Repetiere Bit $x_m$

(7)  $\quad\quad e = e + e_{plus}(x_m)$

$\quad$ end do

(8 )  $\quad m = m + 1$

end do

# FIG 3

(1)     $e = e_{ini}$

(2)     $m = 1$

(3)     do while $m <= N$

(4)         $e = e - e_{minus}(x_m)$

(5)         do while $e <= 0$ then

(6)            Wähle Bit $x_m$ für Übertragung aus

(7)            $e = e + e_{plus}(x_m)$

        end do

(8)         $m = m + 1$

    end do